(19) Europäisches Patentamt
European Patent Office
Office européen des brevets

(11) **EP 1 171 334 B1**

(12) **EUROPÄISCHE PATENTSCHRIFT**

(45) Veröffentlichungstag und Bekanntmachung des Hinweises auf die Patenterteilung:
**05.08.2009 Patentblatt 2009/32**

(51) Int Cl.:
*B60T 8/00* (2006.01)     *B60T 8/50* (2006.01)

(21) Anmeldenummer: **00990575.3**

(86) Internationale Anmeldenummer:
**PCT/DE2000/004616**

(22) Anmeldetag: **22.12.2000**

(87) Internationale Veröffentlichungsnummer:
**WO 2001/049541 (12.07.2001 Gazette 2001/28)**

(54) **VERFAHREN UND VORRICHTUNG ZUR REGELUNG DER BREMSWIRKUNG**

METHOD AND DEVICE FOR REGULATING BRAKING EFFECT

PROCEDE ET DISPOSITIF DE REGULATION DE LA FORCE DE FREINAGE

(84) Benannte Vertragsstaaten:
**DE FR GB IT**

(72) Erfinder:
• **SAUTER, Thomas**
  **71686 Remseck (DE)**
• **SCHMITT, Johannes**
  **71706 Markgröningen (DE)**

(30) Priorität: **30.12.1999 DE 19963745**

(43) Veröffentlichungstag der Anmeldung:
**16.01.2002 Patentblatt 2002/03**

(73) Patentinhaber: **ROBERT BOSCH GMBH**
**70442 Stuttgart (DE)**

(56) Entgegenhaltungen:
| | |
|---|---|
| DE-A- 4 305 155 | DE-A- 19 615 294 |
| DE-A- 19 619 381 | DE-A- 19 708 508 |

**Beschreibung**

Stand der Technik

Die Erfindung betrifft Verfahren und eine Vorrichtung zur Steuerung oder Regelung der Bremswirkung an wenigstens einem Rad eines Kraftfahrzeugs mit den Merkmalen der unabhängigen Ansprüche.

Verfahren und Vorrichtung zur Steuerung oder Regelung der Bremswirkung an wenigstens einem Rad eines Fahrzeuges sind aus dem Stand der Technik in vielerlei Modifikationen bekannt.

Aus der in der Automobiltechnischen Zeitschrift (ATZ) 96, 1994, Heft 11, auf den Seiten 674 bis 689 erschienenen Veröffentlichung "FDR - Die Fahrdynamikregelung von Bosch" ist beispielsweise ein Verfahren bzw. eine Vorrichtung zur Regelung des Radschlupfes bekannt. Mit diesem Verfahren bzw. mit dieser Vorrichtung wird durch die Regelung des Radschlupfes die Gierrate des Fahrzeugs geregelt. Hierzu wird die gemessene Gierrate mit einem Sollwert für die Gierrate verglichen, wobei eine Regelabweichung für die Gierrate ermittelt wird. In Abhängigkeit dieser Regelabweichung werden u.a. Sollschlupfänderungen ermittelt, aus denen die an den einzelnen Rädern einzustellenden Sollschlupfwerte ermittelt werden. In Abhängigkeit der Sollschlupfwerte und den ermittelten Istschlupfwerten werden die den einzelnen Rädern zugeordneten Aktuatoren zur Einstellung der Sollschlupfwerte angesteuert. Diese Art der Ansteuerung wird als fahrerunabhängig durchgeführte Bremseneingriffe bezeichnet. Unterstützend können auch Motoreingriffe zur Reduzierung des vom Motor abgegebenen Motormoments durchgeführt werden. Vor allem durch die fahrerunabhängigen radindividuellen Bremseneingriffe wird ein Giermoment auf das Fahrzeug aufgebracht, durch welches sich die Istgierrate des Fahrzeuges an den Sollwert für die Gierrate annähert.

Aus dem SAE-Paper 870337 "ASR - Traction Control - A Logical Extension of ABS" ist ein Verfahren bzw. eine Vorrichtung zur Steuerung des Radschlupfes bekannt. Mit diesem Verfahren bzw. mit dieser Vorrichtung wird im Vortriebsfall der Antriebsschlupf der angetriebenen Räder gesteuert. Hierzu wird der ermittelte Istschlupf mit zugehörigen Schlupfschwellen verglichen. Überschreitet der Istschlupf die Schlupfschwelle, so werden zum einen fahrerunabhängige Bremseneingriffe an den angetriebenen Rädern durchgeführt. Zum anderen wird das vom Motor abgegebene Motormoment reduziert.

Aus der DE 196 04 126 A1 ist eine Steuerung einer Bremsanlage bekannt, bei der der Bremsdruck durch Pulse mit veränderbaren Parametern auf- und abgebaut wird. Dabei werden die Parameter abhängig von der Dynamik der Druckänderung, insbesondere abhängig von der Temperatur der Bremshydraulikflüssigkeit, verändert.

Sowohl bei der vorstehend aufgeführten Regelung als auch bei der vorstehend aufgeführten Steuerung des Radschlupfes kann es zu folgendem Problem kommen: Bei einer Kurvenfahrt wirken Querkräfte auf das Fahrzeug. Diese Querkräfte führen u.a. dazu, dass bei den den Rädern zugeordneten Radbremszylindern die Kolben, die zur Erzeugung der Bremswirkung verschoben werden, ausgelenkt werden. Dieses Auslenken der Kolben führt zu einem Lüftspiel. Soll nun in solch einer Situation, in der die Kolben aufgrund einer Kurvenfahrt ausgelenkt sind, ein fahrerunabhängiger Bremseneingriff durchgeführt werden, so ist zur Kompensation dieses erhöhten Lüftspiels einer erhöhter Bedarf an Bremsmedium erforderlich. Wird dieser erhöhte Bedarf an Bremsmedium bei der Durchführung eines fahrerunabhängigen Bremseneingriffs nicht berücksichtigt, so kann es gerade bei der eingangs genannten Regelung des Radschlupfes, mit der die Gierrate des Fahrzeuges geregelt wird, zu Abweichungen in der Regelung kommen.

Aus dem Stand der Technik sind verschiedene Vorrichtungen bzw. Verfahren, die sich mit diesem Problem beschäftigen, bekannt.

Beispielsweise sei auf die in der EP 0 166 258 B2 offenbarte Antriebsschlupfregelung verwiesen. Bei dieser Antriebsschlupfregelung wird unterhalb der die Durchdrehneigung signalisierenden Schwellen automatisch ein geringer Bremsdruck an den Bremsen eingesteuert, der so groß ist, dass die Bremsbacken gerade angelegt werden, aber noch keine wesentliche Bremsung erfolgt. Hierbei handelt es sich um einen Füllpuls konstanter Zeitdauer, der vor der eigentlichen Druckeinspeisung, die auf die Antriebsschlupfregelung zurückgeht und mit der der zu hohe Antriebsschlupf beseitigt werden soll, eingespeist wird.

Aus der DE 196 15 294 A1 ist eine Schlupfregelung bekannt, bei der ebenfalls ein Füllpuls ermittelt wird. Hierzu wird zum einen ein die Fahrzeugbewegung beschreibendes und/oder beeinflussendes Kriterium und zum anderen eine die Raddynamik wenigstens eines Rades beschreibende Größe ermittelt. In Abhängigkeit des ermittelten Kriteriums wird überprüft, ob ein fahrerunabhängiger Bremseneingriff an einem Rad absehbar ist. Wird festgestellt, dass ein fahrerunabhängiger Bremseneingriff absehbar ist, so werden zeitlich vor dem absehbaren fahrerunabhängigen Bremseneingriff die dem Rad zugeordneten Aktuatoren für eine variable Zeitdauer geringfügig betätigt. Die Dauer der geringfügigen Betätigung der Aktuatoren wird in Abhängigkeit der die Raddynamik des zugehörigen Rades beschreibenden Größe ermittelt.

Die beiden zum Stand der Technik gehörenden Schlupfregelungen, haben den Nachteil, dass ein gesonderter Füllpuls erzeugt wird, der nicht durch die Schlupfregelung bedingt ist. Dadurch kann es vorkommen, dass ein Füllpuls erzeugt wird, obwohl eine Druckeinspeisung, die auf die Schlupfregelung zurückgeht, gar nicht erforderlich ist. Dies kann zu Beeinträchtigungen des Fahrkomforts führen, da zur Erzeugung des Füllpulses eine in der Bremsanlage enthaltene Pumpe betätigt werden muß, was mit einer für den Fahrer wahrnehmbaren Geräuschentwicklung verbunden ist.

Die Aufgabe der vorliegenden Erfindung besteht demzufolge darin, bestehende Verfahren bzw. Vorrichtungen zur Steuerung oder Regelung der Bremswirkung an wenigstens einem Rad eines Fahrzeuges zu verbessern.

Diese Aufgabe wird durch die kennzeichnenden Merkmale der unabhängigen Ansprüche gelöst.

Vorteile der Erfindung

Bei dem erfindungsgemäßen Verfahren handelt es sich um ein Verfahren zur Steuerung oder Regelung der Bremswirkung an wenigstens einem Rad eines Fahrzeuges. Bei diesem Verfahren wird eine Querdynamikgröße, die die Querdynamik des Fahrzeuges beschreibt, ermittelt. Bei dieser Querdynamikgröße kann es sich um die auf das Fahrzeug wirkende Querbeschleunigung oder um die Giergeschwindigkeit des Fahrzeuges handeln. Diese Größen werden entweder, sofern entsprechende Sensoren vorhanden sind, mit Hilfe dieser Sensoren ermittelt, oder, sofern entsprechende Sensoren nicht vorhanden sind, aus anderen Größen, beispielsweise den Radgeschwindigkeiten hergeleitet.

In Abhängigkeit einer Fahrzeugdynamikgröße, die die Fahrzeugdynamik beschreibt oder einer Raddynamikgröße, die die Raddynamik wenigstens eines Rades beschreibt, wird ermittelt, ob ein fahrerunabhängiger Bremseneingriff erforderlich.

Handelt es sich beispielsweise um eine Schlupfregelung, wie sie in der eingangs aufgeführten Veröffentlichung "FDR - Die Fahrdynamikregelung von Bosch" beschrieben ist, so entspricht die Fahrzeugdynamikgröße der Giergeschwindigkeit des Fahrzeuges. In abgewandelter Form kann alternativ auch die auf das Fahrzeug wirkende Querbeschleunigung ausgewertet werden. An dieser Stelle soll darauf hingewiesen werden, dass die Verwendung der beiden Begriffe Querdynamikgröße und Fahrzeugdynamikgröße so zu verstehen ist, dass beide Größen grundsätzlich unterschiedliche Größen sind. Allerdings soll dies nicht die Möglichkeit ausschließen, dass beide Größen identisch sind. Dies ist beispielsweise dann der Fall, wenn sowohl die Querdynamikgröße als auch die Fahrzeugdynamikgröße der auf das Fahrzeug wirkenden Querbeschleunigung entsprechen.

Ein fahrerunabhängiger Bremseneingriff ist dann erforderlich, wenn eine Regelabweichung für die Fahrzeugdynamikgröße vorliegt bzw. wenn die Regelabweichung größer ist als ein zugehöriger Schwellenwert.

Handelt es sich beispielsweise um eine Vorrichtung, wie sie in dem SAE-Paper 870337 beschrieben ist, so entspricht die Raddynamikgröße dem Radschlupf. Alternativ kann auch die Radverzögerung oder die Radbeschleunigung ausgewertet werden. Denkbar ist auch die kombinierte Auswertung einer Fahrzeugdynamikgröße und einer Raddynamikgröße. In diesem Fall ist ein fahrerunabhängiger Bremeneingriff dann erforderlich, wenn die Raddynamikgröße größer ist als ein zugehöriger Schwellenwert.

Für den Fall, dass ein fahrerunabhängiger Bremseneingriff erforderlich ist, wird ein pulsförmiges Signal zur Ansteuerung von den wenigstens einem Rad zugeordneten Aktuatoren ermittelt. Vorteilhafterweise handelt es sich bei diesem pulsförmigen Signal um ein moduliertes, insbesondere ein pulsweitenmoduliertes Signal. Durch die Modulation des Signals wird der Betätigungsgrad der dem jeweiligen Rad zugeordneten Aktuatoren festgelegt. Für gewöhnlich handelt es sich bei den Aktuatoren um dem jeweiligen Rad zugeordnete Ventile, durch deren Betätigung Bremsmedium in den Radbremszylinder hinein bzw. aus diesem herausgelassen wird.

Bei der Bremsanlage kann es sich beispielsweise um eine hydraulische oder eine elektrohydraulische Bremsanlage handeln, bei denen als eine Bremsflüssigkeit als Bremsmedium verwendet wird. Alternativ kann es sich bei der Bremsanlage auch um eine pneumatische oder eine elektropneumatische handeln, bei der Luft als Bremsmedium verwendet wird. Darüber hinaus kann es sich um eine elektromechanische Bremsanlage handeln, bei der die Bremswirkung elektromotorisch aufgebracht wird.

Erfindungsgemäß wird der erste Impuls des pulsförmigen Signals in Abhängigkeit der Querdynamikgröße in seiner Zeitdauer beeinflußt. Dadurch dass der erste Impuls des pulsförmigen Signals in seiner Zeitdauer beeinflußt wird, ist kein gesonderter Füllpuls vonnöten. D.h. es ist keine zusätzliche Ansteuerung der Pumpe erforderlich. Das erhöhte Lüftspiel wird direkt durch die Ansteuerung der Aktuatoren mit Hilfe des pulsförmigen Signals kompensiert.

Dabei wird der erste Impuls des pulsförmigen Signals in Abhängigkeit der Querdynamikgröße derart in seiner Zeitdauer beeinflusst, dass er mit zunehmender Querbewegung des Fahrzeugs verlängert wird, wobei der erste Impuls eine längere Zeitdauer als die nachfolgenden Impulse aufweist.

Durch die Verlängerung des ersten Impulses des pulsförmigen Signals wird bei einer Kurvenfahrt eine Druckaufbaudynamik erzielt, die mit der bei einer Geradeausfahrt vergleichbar ist.

In einer vorteilhaften Ausgestaltung, dass die Bremswirkung hydraulisch aufgebracht wird und das pulsförmige Signale in Abhängigkeit von wenigstens zwei wählbaren unterschiedlichen Ermittlungsmodi ermittelt wird. Insbesondere ist dabei vorgesehen, dass den Ermittlungsmodi wenigstens zwei unterschiedliche Hydraulikmodelle zugrunde liegen. Die Wahl der Ermittlungsmodi geschieht dann derart abhängig von der Querdynamikgröße, dass der erste Impuls des pulsförmigen Signals in seiner Zeitdauer beeinflußt wird.

Weitere Vorteile sowie vorteilhafte Ausgestaltungen können der Zeichnung sowie der Beschreibung des Ausführungsbeispiels entnommen werden.

Zeichnung

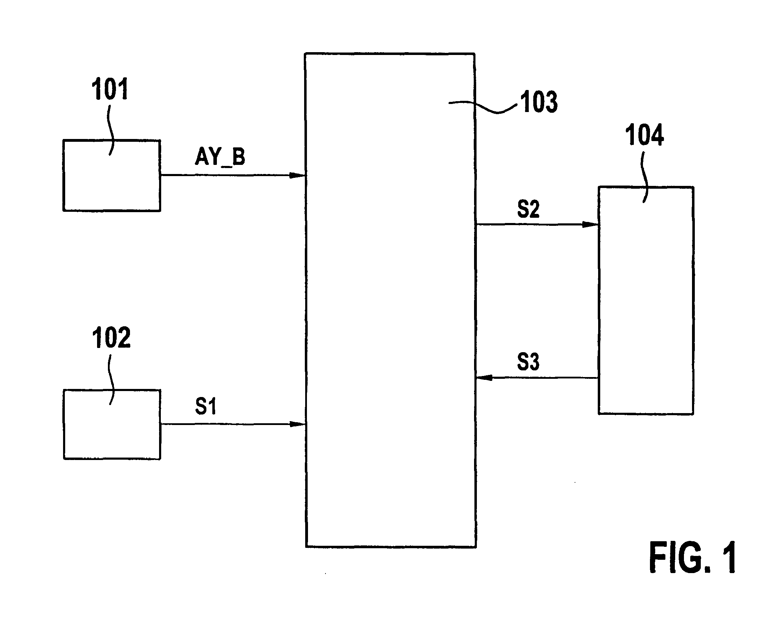

Die Zeichnung besteht aus den Figuren 1 bis 3. Figur 1 zeigt in einer Übersicht mit Hilfe eines Blockschaltbildes die erfindungsgemäße Vorrichtung. Figur 2 zeigt in Form eines Flußdiagramms das in der erfindungsgemäßen Vorrichtung ablaufende erfindungsgemäße Verfahren. Figur 3 gibt einen Signalverlauf wieder.

Ausführungsbeispiel

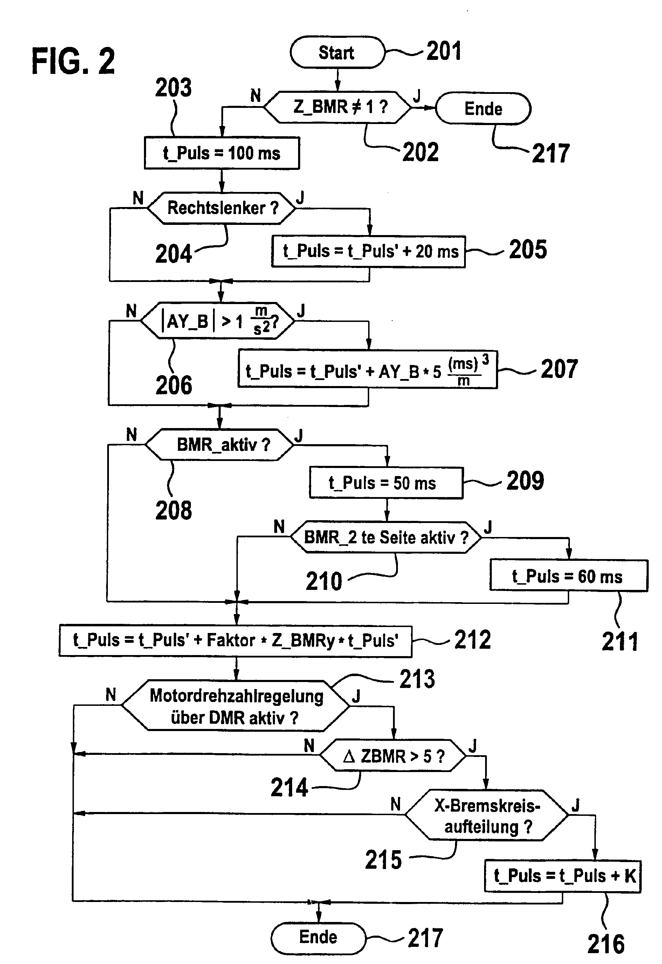

Mit 101 ist ein Mittel zur Ermittlung einer Querdynamikgröße AY_B bezeichnet. Bei der Querdynamikgröße handelt es sich beispielsweise um die auf das Fahrzeug wirkende Querbeschleunigung. Die Querdynamikgröße wird einem Block 103 zugeführt. Bei dem Mittel 101 handelt es sich beispielsweise um einen Querbeschleunigungssensor.
Mit 102 sind verschiedene weiter Sensoren dargestellt. Der Block 102 umfaßt auf jeden Fall Raddrehzahlsensoren, mit denen die Raddrehzahlen der einzelnen Räder erfaßt werden. Handelt es sich bei der Schlupfregelung um solch eine, wie sie in der Veröffentlichung "FDR - Die Fahrdynamikregelung von Bosch" beschrieben ist, so umfaßt der Block 102 ferner einen Lenkwinkelsensor, einen Gierratensensor und einen Vordrucksensor, mit dem der vom Fahrer eingestellte Vordruck erfaßt wird. Die mit den verschiedenen Sensoren erfaßten Signale sind zu S1 zusammengefaßt. Die Signale S1 werden ebenfalls dem Block 103 zugeführt.
Block 103 stellt ein Reglermittel dar, mit dem die eigentliche Steuerung bzw. Regelung des Radschlupfes durchgeführt wird. Hierzu werden die ihm zugeführten Größen ausgewertet. Handelt es sich um eine Antriebsschlupfregelung, wie sie in dem SAE-Paper 870337 beschrieben ist, so werden im Block 103 die ihm vom Block 102 zugeführten Raddrehzahlen ausgewertet. In diesem Fall wird für die angetriebenen Räder in Abhängigkeit der Raddrehzahlen ein Istschlupf ermittelt. Dieser Istschlupf wird mit zugehörigen Schwellenwerten verglichen. Ausgehend von diesem Vergleich werden im Block 103 Signale S2 ermittelt, die Aktuatoren 104 zugeführt werden. Bei den Aktuatoren handelt es sich beispielsweise um den einzelnen Rädern zugeordnete Ventile und um Mittel, mit denen das vom Motor abgegebene Motormoment beeinflußt werden kann.
Handelt es sich eine Schlupfregelung, wie sie in der Veröffentlichung "FDR - Die Fahrdynamikregelung von Bosch" beschrieben wird, so wird im Block 103 die ihm vom Block 102 zugeführte Istgierrate mit einer Sollgierrate verglichen. Die Sollgierrate wird mit Hilfe eines mathematischen Modells in Abhängigkeit des ermittelten Lenkwinkels, der dem Block 103 ausgehend vom Block 102 zugeführt wird und der Fahrzeuggeschwindigkeit, die im Block 103 aus den ihm ebenfalls ausgehend vom Block 102 zugeführten Raddrehzahlen ermittelt wird, ermittelt. In Abhängigkeit der sich aus der Istgierrate und der Sollgierrate ergebenden Regelabweichung werden auch in diesem Fall im Block 103 Signale S2 erzeugt, mit denen die den einzelnen Rädern zugeordneten Aktuatoren und Mittel zu Beeinflussung des vom Motor abgegebenen Motormoment angesteuert werden.
Dem Block 104 werden ausgehend von den Aktuatoren 104 Signale S3 zugeführt, über die der Block 103 eine Information darüber erhält, in welchem Zustand sich die Aktuatoren befinden.
Im folgenden wird auf Figur 2 eingegangen. Vorab sei festgehalten, dass in der Figur 2 in den Verzweigungsblöcken, in denen Abfragen durchgeführt werden, der Einfachheit halber die Fragezeichen weggelassen worden sind.
Das erfindungsgemäße Verfahren beginnt mit einem Schritt 201. Anschließend an den Schritt 201 wird ein Schritt 202 ausgeführt. In diesem Schritt wird der Wert des Pulszählers Z_BMR überprüft. Ist der Wert des Pulszählers ungleich 1, so wird anschließend an den Schritt 202 ein Schritt 217 ausgeführt, mit dem das erfindungsgemäße Verfahren beendet wird. Wird dagegen im Schritt 202 festgestellt, dass der Pulszähler den Wert 1 aufweist, so wird anschließend an den Schritt 202 ein Schritt 203 ausgeführt, mit dem die eigentliche Anpassung des ersten Impuls des pulsförmigen Signals beginnt. Der Pulszähler Z_BMR wird auf den Wert 1 hin untersucht, da nur der erste Impuls des pulsförmigen Signals in Abhängigkeit der Querdynamikgröße beeinflußt werden soll.
Im Schritt 203 wird einer Größe t_Puls, die die Pulsdauer des ersten Impulses des pulsförmigen Signals beschreibt, eine vorgegebene Zeitdauer, im vorliegenden Ausführungsbeispiel die Zeitdauer 100 ms, zugeordnet. Im nachfolgenden Schritt 204 wird überprüft, ob es sich bei dem Fahrzeug um einen Rechtslenker, d.h. um ein Fahrzeug, bei dem das Lenkrad auf der rechten Fahrzeugseite angebracht ist, handelt. Diese Abfrage wird deshalb durchgeführt, da bei einem Rechtslenker für gewöhnlich eine längere Ansaugleitung als bei einem Linkslenker zu berücksichtigen ist. D.h. mit der im Schritt 204 stattfindenden Abfrage wird die Ansaugleitungslänge bzw. der Querschnitt der Ansaugleitung, d.h. der Durchflußwiderstand, berücksichtigt. Liegt ein Rechtslenker vor, so wird anschließend an den Schritt 204 ein Schritt 205 ausgeführt. In diesem Schritt wird die im Schritt 203 bestimmte t_Puls, die im Schritt 205 mit t_Puls' bezeichnet ist, um eine vorgegebene Zeitdauer, im vorliegenden Ausführungsbeispiel um 20 ms, erhöht. Durch diese Erhöhung wird die Kompensation der Ansaugleitungslänge bzw. des Querschnitts der Ansaugleitung realisiert.
Wird dagegen im Schritt 204 festgestellt, dass kein Rechtslenker vorliegt, so wird anschließend an den Schritt 204 direkt der Schritt 206 ausgeführt, da in diesem Fall eine Korrektur bzgl. der Ansaugleitungslänge bzw. dem Querschnitt der Ansaugleitung nicht erforderlich ist.

An dieser Stelle sei festgehalten, dass die beiden Schritte 204 und 205 auch entfallen können, wenn der Einfluß der Ansaugleitungslänge bzw. der Einfluß des Querschnitts der Ansaugleitung nicht zu groß ist. Alternativ bietet es sich auch an, diese beiden Einflüsse bereits in der Zeitdauer, die bei der im Schritt 203 stattfindenden Zuweisung verwendet wird, zu berücksichtigen.

Im Schritt 206 wird die Querdynamikgröße AY_B, die im vorliegenden Ausführungsbeispiel einer Querbeschleunigung entspricht, ausgewertet. Zu diesem Zweck wird im Schritt 206 der Betrag der Querdynamikgröße AY_B mit einem Schwellenwert, im vorliegenden Ausführungsbeispiel dem Wert $1\ m/s^2$, verglichen. Wird im Schritt 206 festgestellt, dass der Betrag der Querdynamikgröße AY_B größer als der Schwellenwert ist, was gleichbedeutend damit ist, dass eine Beeinflussung, d.h. eine Verlängerung der Zeitdauer des ersten Impulses des pulsförmigen Signals erforderlich ist, so wird anschließend an den Schritt 206 ein Schritt 207 ausgeführt. Im Schritt 207 findet die eigentliche Korrektur der Zeitdauer des ersten Impulses des pulsförmigen Signals statt. Hierzu wird ausgehend von der im Schritt 205 ermittelten Zeitdauer t_Puls, die im Schritt 207 mit t_Puls' bezeichnet wird, die in Abhängigkeit der Querdynamikgröße korrigierte Zeitdauer gemäß der Beziehung

$$\texttt{t\_puls = t\_puls' + AY\_B * 5 s²/m * 1 (ms)}$$

ermittelt, d.h. die korrigierte Zeitdauer ergibt sich in Abhängigkeit einer vorgegebenen Zeitdauer für den ersten Impuls und einem Summanden, der von der Querdynamikgröße und einem Faktor, im vorliegenden Ausführungsbeispiel dem Wert 5 (ms)/m, abhängt [(ms) bedeutet dabei Millisekunden]. Der Faktor wird im Vorfeld mit Hilfe von Fahrversuchen und theoretischen Überlegungen ermittelt. Anschließend an den Schritt 207 wird ein Schritt 208 ausgeführt. Bei einer Querbeschleunigung von $10\ m/s^2$ ergibt sich gemäß obiger Formel eine Pulsverlängerungszeit von 50 ms.

Wird dagegen im Schritt 206 festgestellt, dass der Betrag der Querdynamikgröße AY_3 kleiner als der Schwellenwert ist, so wird anschließend an den Schritt 206 gleich der Schritt 208 ausgeführt, da in diesem Fall aufgrund der geringen Querdynamik des Fahrzeuges eine Korrektur der Zeitdauer in Abhängigkeit der Querdynamikgröße nicht erforderlich ist.

Im Schritt 208 wird durch Auswertung des Flags BMR_aktiv überprüft, ob die Bremsmomentenregelung aktiv ist. Ist die Bremsmomentenregelung aktiv, so wird anschließend an den Schritt 208 ein Schritt 209 durchgeführt. In diesem Schritt wird der Größe t_Puls ein vorgegebener Wert für die Zeitdauer zugewiesen. Der im Schritt 209 zugewiesene Wert ist kleiner als der im Schritt 203 zugewiesene Wert. Im vorliegenden Ausführungsbeispiel beträgt der im Schritt 209 verwendete Wert für die Zeitdauer 50 ms.

Anschließend an den Schritt 209 wird ein Schritt 210 ausgeführt. Im diesem Schritt wird überprüft, ob zur bereits laufenden Regelung das zweite Rad des Bremskreises hinzukommt. Ist dies der Fall, so wird anschließend an den Schritt 210 ein Schritt 211 ausgeführt, in welchem der Größe t_Puls ein vorgegebener Wert für die Zeitdauer zugewiesen. Der im Schritt 211 zugewiesene Wert ist zwar kleiner als der im Schritt 203 zugewiesene Wert, jedoch größer als der im Schritt 209 verwendete Wert. Anschließend an den Schritt 211 wird ein Schritt 212 ausgeführt.

Wird im Schritt 208 festgestellt, dass die Bremsmomentenregelung nicht aktiv ist, so wird direkt anschließend an den Schritt 208 der Schritt 212 ausgeführt. Wird im Schritt 210 festgestellt, dass zu der bereits laufenden Regelung das zweite Rad des Bremskreises noch nicht hinzugekommen ist, so wird direkt anschließend an den Schritt 210 ebenfalls der Schritt 212 ausgeführt.

Im Schritt 212 findet eine weitere Bewertung der Zeitdauer des ersten Impulses des pulsförmigen Signals statt. Diese weitere Bewertung erfolgt unter Verwendung der Gleichung

$$\texttt{t\_Puls = t\_Puls' + Faktor * Z\_BMR}_y \texttt{ * t\_Puls'.}$$

D.h. der Wert der neuen Zeitdauer t_Puls ergibt sich als Summe des Wertes der alten Zeitdauer t_Puls' und des mit einem Faktor gewichteten Wertes der alten Zeitdauer. Bei dieser Ermittlung wird berücksichtigt, wieviel Druck im anderen Rad ist, da dieses wie ein Speicher wirkt. Als realistische Zahlenbeispiele können angesehen werden:

$$\texttt{t\_Puls = t\_Puls' + Faktor * Z\_BMR}_y \texttt{ * t\_Puls'.}$$

```
55 ms  = 60ms    + (-0,015)*   5    * 60ms
```

Anschließend an den Schritt 212 wird ein Schritt 213 ausgeführt, in dem überprüft wird, ob die Motordrehzahlregelung der in der Bremsanlage enthaltenen Hydraulikpumpe durch die Bremsmomentenregelung aktiv ist. Ist dies nicht der Fall, so wird direkt anschließend an den Schritt 213 der Schritt 217 ausgeführt, mit dem das erfindungsgemäße Verfahren beendet wird. Ist dagegen die Motordrehzahlregelung aktiv, so wird anschließend an den Schritt 213 ein Schritt 214 ausgeführt.

In diesem Schritt wird überprüft, ob die Größe ΔZBMR größer als ein vorgegebener Wert, im vorliegenden Ausführungsbeispiel größer als der Wert 5 ist. Ist dies nicht der Fall, so anschließend an den Schritt 214 ebenfalls der Schritt 217 ausgeführt. Ist dagegen die im Schritt 214 enthaltene Abfrage erfüllt, so wird anschließend an den Schritt 214 ein Schritt 215 ausgeführt. In diesem Schritt wird überprüft, ob eine X-Bremskreisaufteilung vorliegt. Liegt keine X-Bremskreisaufteilung vor, so wird anschließend an den Schritt 215 ebenfalls der Schritt 217 ausgeführt. Liegt dagegen eine X-Bremskreisaufteilung vor, so wird anschließend an den Schritt 215 ein Schritt 216 ausgeführt. In diesem Schritt wird auf die im Schritt im Schritt 212 ermittelte Zeitdauer eine Größe K aufaddiert, mit der der Einfluß der vorliegenden X_Bremskreisaufteilung auf die Druckerhöhung kompensiert wird. Anschließend an den Schritt 216 wird der Schritt 217 ausgeführt, mit dem das erfindungsgemäße Verfahren beendet wird.

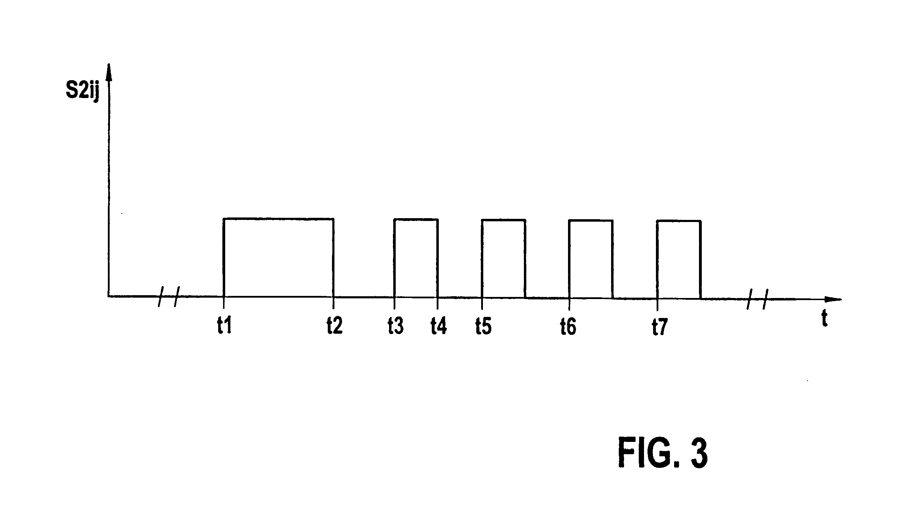

Im folgenden wird auf Figur 3 eingegangen. In dieser Figur ist ein pulsförmiges Signal S2ij dargestellt, mit dem die einem Rad zugeordneten Aktuatoren angesteuert werden. Die beiden Indizes i bzw. j sind dabei Platzhalter, mit denen festgelegt werden kann, ob es sich um ein Vorder- oder ein Hinterrad (Index i) bzw. ob es um ein linkes oder ein rechtes Rad (Index j) handelt. Wie man der Darstellung in Figur 3 entnehmen kann, weist der erste Impuls, der durch die Zeitpunkte t1 und t2 definiert ist, eine längere Zeitdauer auf, als die nachfolgenden Impulse, die zu den Zeitpunkten t3, t5, t6 sowie t7 beginnen. Die Zeitdauer des ersten Impulses ist gemäß dem in Figur 2 dargestellten erfindungsgemäßen Verfahren ermittelt worden. Dass die auf den ersten Impuls folgenden Impulse den gleichen Abstand untereinander haben und dass diese Impulse die gleiche Breite haben, soll keine einschränkende Wirkung haben. Diese Darstellung wurde lediglich deshalb gewählt, um die Verlängerung der Zeitdauer des ersten Impulses zu verdeutlichen.

An dieser Stelle sei festgehalten, dass es auch denkbar ist, den erfindungsgemäßen Gegenstand in abgewandelter Form auch bei einer elektromechanischen Bremsanlage einzusetzen.

Die in der Beschreibung bzw. in den Figuren gewählte Darstellung soll keine einschränkende Wirkung auf das erfindungsgemäße Verfahren bzw. auf die erfindungsgemäße Vorrichtung haben.

**Patentansprüche**

1. Verfahren zur Steuerung oder Regelung der Bremswirkung an wenigstens einem Rad eines Kraftfahrzeuges, bei dem

- eine Querdynamikgröße (AY_B), die die Querdynamik des Fahrzeuges beschreibt, ermittelt wird, und
- in Abhängigkeit einer Fahrzeugdynamikgröße (S1), die die Fahrzeugdynamik beschreibt oder einer Raddynamikgröße, die die Raddynamik wenigstens eines Rades beschreibt, ermittelt wird, ob ein fahrerunabhängiger Bremseneingriff erforderlich ist, und
- für den Fall, dass ein fahrerunabhängiger Bremseneingriff erforderlich ist, ein pulsförmiges Signal (S2) zur Ansteuerung von den wenigstens einem Rad zugeordneten Aktuatoren (104) zur Einstellung der Bremswirkung an dem Rad ermittelt wird,
- wobei erste Impuls des pulsförmigen Signals (S2) in Abhängigkeit der Querdynamikgröße (S1) in seiner Zeitdauer beeinflußt wird,
**dadurch gekennzeichnet, dass**
- der erste Impuls des pulsförmigen Signals (S2) in Abhängigkeit der Querdynamikgröße (S1) derart in seiner Zeitdauer beeinflußt wird, dass er mit zunehmender Querbewegung des Fahrzeugs verlängert wird,
- wobei der erste Impuls eine längere Zeitdauer als die nachfolgenden Impulse aufweist.

2. Verfahren nach Anspruch 1, **dadurch gekennzeichnet, dass** zur Ermittlung der Querdynamikgröße (AY_B) die am Fahrzeug wirkende Querkraft, insbesondere die am Fahrzeug wirkende Querbeschleunigung, und/oder die Gierbewegung des Fahrzeugs, insbesondere die Giergeschwindigkeit des Fahrzeugs, erfasst wird.

3. Verfahren nach Anspruch 2, **dadurch gekennzeichnet, dass**

- die Erfassung der am Fahrzeug wirkenden Querkraft durch wenigstens einen Querbeschleunigungssensor und/oder die Erfassung der Giergeschwindigkeit des Fahrzeugs durch einen Gierratensensor geschieht und/oder

- die Erfassung der am Fahrzeug wirkenden Querkraft und/oder die Erfassung der Giergeschwindigkeit des Fahrzeugs abhängig von den erfaßten Raddrehzahlen geschieht.

4. Verfahren nach Anspruch 1, **dadurch gekennzeichnet, dass**

- die Fahrzeugdynamikgröße die am Fahrzeug wirkende Querkraft und/oder die Gierbewegung des Fahrzeug repräsentiert und/oder
- die Raddynamikgröße den Radschlupf, die Radbeschleunigung und/oder die Radverzögerung wenigstens eines Rades des Fahrzeugs repräsentiert.

5. Verfahren nach Anspruch 1, **dadurch gekennzeichnet, dass** das pulsförmige Signal (S2) ein moduliertes, insbesondere pulsweitenmoduliertes Signal ist, wobei durch die Modulation der Betätigungsgrad des angesteuerten Aktuators (104) festgelegt wird.

6. Verfahren nach Anspruch 1, **dadurch gekennzeichnet, dass** die Bremswirkung hydraulisch aufgebracht wird und das pulsförmige Signal (S2) in Abhängigkeit von wenigstens zwei wählbaren unterschiedlichen Ermittlungsmodi, denen insbesondere wenigstens zwei unterschiedliche Hydraulikmodelle zugrunde liegen, ermittelt wird und die Wahl der Ermittlungsmodi derart abhängig von der Querdynamikgröße (S1) geschieht, dass der erste Impuls des pulsförmigen Signals (S2) in seiner Zeitdauer beeinflußt wird.

7. Vorrichtung zur Steuerung oder Regelung der Bremswirkung an wenigstens einem Rad eines Kraftfahrzeuges, mit Mitteln (101, 102, 103), mittels der

- eine Querdynamikgröße (AY_B), die die Querdynamik des Fahrzeuges beschreibt, ermittelt wird, und
- in Abhängigkeit einer Fahrzeugdynamikgröße (S1), die die Fahrzeugdynamik beschreibt oder einer Raddynamikgröße, die die Raddynamik wenigstens eines Rades beschreibt, ermittelt wird, ob ein fahrerunabhängiger Bremseneingriff erforderlich ist, und
- für den Fall, dass ein fahrerunabhängiger Bremseneingriff erforderlich ist, ein pulsförmiges Signal (S2) zur Ansteuerung von den wenigstens einem Rad zugeordneten Aktuatoren (104) zur Einstellung der Bremswirkung an dem Rad ermittelt wird,
- wobei die Mittel (103) weiterhin derart ausgestaltet sind, dass der erste Impuls des pulsförmigen Signals (S2) in Abhängigkeit der Querdynamikgröße (S1) in seiner Zeitdauer beeinflußt wird,

**dadurch gekennzeichnet, dass**
- die Mittel (103) derart ausgestaltet sind, dass der erste Impuls des pulsförmigen Signals (S2) in Abhängigkeit der Querdynamikgröße (S1) derart in seiner Zeitdauer beeinflußt wird, dass er mit zunehmender Querbewegung des Fahrzeugs verlängert wird,
- wobei der erste Impuls eine längere Zeitdauer als die nachfolgenden Impulse aufweist.

8. Vorrichtung nach Anspruch 7, **dadurch gekennzeichnet, dass** die Mittel (103) derart ausgestaltet sind, dass das pulsförmige Signal (S2) ein moduliertes, insbesondere pulsweitenmoduliertes Signal ist, wobei durch die Modulation der Betätigungsgrad des angesteuerten Aktuators (104) festgelegt wird.

9. Vorrichtung nach Anspruch 7, **dadurch gekennzeichnet, dass** zur Aufbringung der Bremswirkung eine hydraulische, elektrohydraulische, pneumatische, elektropneumatische oder elektromechanische Bremsanlage vorgesehen ist.

## Claims

1. Method for controlling or regulating the braking effect at at least one wheel of a motor vehicle, in which

- a lateral dynamics variable (AY_B), which describes the lateral dynamics of the vehicle, is acquired, and
- it is determined, as a function of a vehicle dynamics variable (S1), which describes the vehicle dynamics, or a wheel dynamics variable, which describes the wheel dynamics of at least one wheel, whether a braking intervention which is independent of the driver is necessary, and
- if a braking intervention which is independent of the driver is necessary, a pulse-shaped signal (S2) for driving actuators (104) which are assigned to at least one wheel is acquired in order to set the braking effect at the wheel,
- wherein the duration of the first pulse of the pulse-shaped signal (S2) is influenced as a function of the lateral dynamics variable (S1),
**characterized in that**
- the duration of the first pulse of the pulse-shaped signal (S2) is influenced as a function of the lateral dynamics variable (S1) in such a way that it is extended as the lateral movement of the vehicle increases,
- wherein the first pulse has a longer duration than the subsequent pulses.

2. Method according to Claim 1, **characterized in that** the lateral force acting on the vehicle, in particular the lateral acceleration acting on the vehicle and/or the yaw movement of the vehicle, in particular the yaw rate of the vehicle, is sensed in order to acquire the lateral dynamics variable (AY_B).

3. Method according to Claim 2, **characterized in that**

- the lateral force acting on the vehicle is sensed by means of at least one lateral acceleration sensor and/or the yaw rate of the vehicle is sensed by means of a yaw rate sensor, and/or,
- the lateral force acting on the vehicle and/or the yaw rate of the vehicle are sensed as a function of the sensed wheel speeds.

4. Method according to Claim 1, **characterized in that**

- the vehicle dynamics variable represent the lateral force acting on the vehicle and/or the yaw movement of the vehicle, and/or
- the wheel dynamics variable represent the wheel slip, the wheel acceleration and/or the wheel deceleration of at least one wheel of the vehicle.

5. Method according to Claim 1, **characterized in that** the pulse-shaped signal (S2) is a modulated, in particular pulse-width-modulated signal, wherein the degree of activation of the driven actuator (104) is defined by means of the modulation.

6. Method according to Claim 1, **characterized in that** the braking effect is applied hydraulically and the pulse-shaped signal (S2) is acquired as a function of at least two different selectable acquisition modes which are used as the basis for, in particular, at least two different hydraulic models, and the selection of the acquisition mode is carried out as a function of the lateral dynamics variable (S1) in such a way that the duration of the first pulse of the pulse-shaped signal (S2) is influenced.

7. Device for controlling or regulating the braking effect at at least one wheel of a motor vehicle, with means (101, 102, 103), by means of which

- a lateral dynamics variable (AY_B), which describes the lateral dynamics of the vehicle, is acquired, and
- it is determined, as a function of a vehicle dynamics variable (S1), which describes the vehicle dynamics, or a wheel dynamics variable, which describes the wheel dynamics of at least one wheel, whether a braking intervention which is independent of the driver is necessary, and
- if a braking intervention which is independent of the driver is necessary, a pulse-shaped signal (S2) for driving actuators (104) which are assigned to at least one wheel is acquired in order to set the braking effect at the wheel,
- wherein the means (103) are also configured in such a way that the duration of the first pulse of the pulse-shaped signal (S2) is influenced as a function of the lateral dynamics variable (S1),
**characterized in that**
- the means (103) are configured in such a way that the duration of the first pulse of the pulse-shaped signal (S2) is influenced as a function of the lateral dynamics variable (S1) in such a way that said first pulse is extended as the lateral movement of the vehicle increases,
- wherein the first pulse has a longer duration than the subsequent pulses.

8. Device according to Claim 7, **characterized in that** the means (103) are configured in such a way that the pulse-shaped signal (S2) is a modulated, in particular pulse-width-modulated signal, wherein the degree of activation of the driven actuator (104) is defined by means of the modulation.

9. Device according to Claim 7, **characterized in that** a hydraulic, electro-hydraulic, pneumatic, electropneumatic or electro-mechanical brake system is provided for applying the braking effect.

**Revendications**

1. Procédé de commande ou de régulation de l'action de freinage exercée sur au moins une roue d'un véhicule automobile, dans lequel :

   - une grandeur dynamique transversale (AY_B) qui décrit la dynamique transversale du véhicule est déterminée, et
   - en fonction d'une grandeur dynamique (S1) du véhicule ou d'une grandeur dynamique de roue qui décrit la dynamique d'au moins une roue, on détermine si une intervention de freinage indépendante du conducteur est nécessaire, et
   - au cas où une intervention de freinage indépendante du conducteur est nécessaire, un signal (S2) en forme d'impulsions destiné à commander les actionneurs (104) associés à au moins une roue pour établir l'intervention de freinage sur la roue est déterminé,
   - la grandeur dynamique transversale (S1) agissant sur la durée de la première impulsion du signal (S2) en forme d'impulsions,
   **caractérisé en ce que**
   - la grandeur dynamique transversale (S1) agit sur la durée de la première impulsion du signal (S2) en forme d'impulsions de manière à la prolonger si le déplacement transversal du véhicule augmente et
   - **en ce que** la première impulsion a une durée plus longue que les impulsions suivantes.

2. Procédé selon la revendication 1, **caractérisé en ce que** pour déterminer la grandeur dynamique transversale (AY_B), la force transversale qui agit sur le véhicule et en particulier l'accélération transversale qui agit sur le véhicule et/ou le déplacement d'embardée du véhicule et en particulier la vitesse d'embardée du véhicule sont déterminés.

3. Procédé selon la revendication 2, **caractérisé en ce que**

   - la détermination de la force transversale qui agit sur le véhicule s'effectue par au moins une sonde d'accélération transversale et/ou
   - **en ce que** la détermination de la vitesse d'embardée du véhicule s'effectue par l'intermédiaire d'une sonde de vitesse d'embardée et/ou
   - **en ce que** la détermination de la force transversale qui agit sur le véhicule et/ou la détermination de la vitesse d'embardée qui agit sur le véhicule s'effectuent indépendamment de la vitesse détectée de rotation de la roue.

4. Procédé selon la revendication 1, **caractérisé en ce que**

   - la grandeur dynamique du véhicule représente la force transversale qui agit sur le véhicule et/ou le déplacement d'embardée du véhicule et/ou
   - **en ce que** la grandeur dynamique de roue représente le patinage de la roue, l'accélération et/ou le ralentissement d'au moins une roue du véhicule.

5. Procédé selon la revendication 1, **caractérisé en ce que** le signal (S2) en forme d'impulsions est un signal modulé et en particulier à modulation de la largeur des impulsions, la modulation définissant le degré d'actionnement de l'actionneur (104) asservi.

6. Procédé selon la revendication 1, **caractérisé en ce que** l'action de freinage est appliquée hydrauliquement, **en ce que** le signal (S2) en forme d'impulsions est déterminé en fonction d'au moins deux modes de détermination différents et sélectionnables, basés en particulier sur deux modèles hydrauliques différents, et **en ce que** la sélection du mode de détermination s'effectue en fonction de la grandeur dynamique transversale (S1) de manière à agir sur la durée de la première impulsion du signal (S2) en forme d'impulsions.

7. Dispositif de commande ou de régulation de l'action de freinage exercée sur au moins une roue d'un véhicule automobile à l'aide de moyens (101, 102, 103) au moyen desquels :

   - une grandeur dynamique transversale (AY_B) qui décrit la dynamique transversale du véhicule est déterminée, et

- en fonction d'une grandeur dynamique (S1) du véhicule ou d'une grandeur dynamique de roue qui décrit la dynamique d'au moins une roue, on détermine si une intervention de freinage indépendante du conducteur est nécessaire, et

- au cas où une intervention de freinage indépendante du conducteur est nécessaire, un signal (S2) en forme d'impulsions destiné à commander les actionneurs (104) associés à au moins une roue pour établir l'intervention de freinage sur la roue est déterminé,

- les moyens (103) étant en outre configurés de telle sorte que la grandeur dynamique transversale (S1) agit sur la durée de la première impulsion du signal (S2) en forme d'impulsions,

**caractérisé en ce que**

- les moyens (103 sont configurés de telle sorte que la grandeur dynamique transversale (S1) agit sur la durée de la première impulsion du signal (S2) en forme d'impulsions de manière à la prolonger si le déplacement transversal du véhicule augmente et

- **en ce que** la première impulsion a une longueur plus longue que les impulsions suivantes.

8. Dispositif selon la revendication 7, **caractérisé en ce que** les moyens (103) sont configurés de telle sorte que le signal (S2) en forme d'impulsions est un signal modulé et en particulier à modulation de la largeur des impulsions, la modulation définissant le degré d'actionnement de l'actionneur (104) asservi.

9. Dispositif selon la revendication 7, **caractérisé en ce qu'**une installation hydraulique, électrohydraulique, pneumatique, électropneumatique ou électromécanique de freinage est prévue pour appliquer l'action de freinage.

**FIG. 1**

# FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19604126 A1
- EP 0166258 B2

- DE 19615294 A1

**In der Beschreibung aufgeführte Nicht-Patentliteratur**

- *Automobiltechnischen Zeitschrift (ATZ) 96,* 1994, 674-689